(19) Europäisches Patentamt
European Patent Office
Office européen des brevets

(11) EP 3 586 631 B1

(12) **EUROPEAN PATENT SPECIFICATION**

(45) Date of publication and mention of the grant of the patent:
**15.05.2024 Bulletin 2024/20**

(21) Application number: **19182326.9**

(22) Date of filing: **04.02.2009**

(51) International Patent Classification (IPC):
***A01N 43/56*** *(2006.01)* ***A01P 3/00*** *(2006.01)*
***A01P 7/04*** *(2006.01)* ***A01N 37/38*** *(2006.01)*
***A01N 37/46*** *(2006.01)* ***A01N 37/50*** *(2006.01)*
***A01N 43/36*** *(2006.01)* ***A01N 43/54*** *(2006.01)*
***A01N 43/653*** *(2006.01)* ***A01N 47/02*** *(2006.01)*
***A01N 47/24*** *(2006.01)* ***A01N 47/26*** *(2006.01)*
***A01N 47/34*** *(2006.01)* ***A01N 47/38*** *(2006.01)*
***A01N 55/00*** *(2006.01)* ***A01N 57/12*** *(2006.01)*
***A01N 59/26*** *(2006.01)*

(52) Cooperative Patent Classification (CPC):
(C-Sets available)
**A01N 43/56** (Cont.)

(54) **PLANT HEALTH COMPOSITION**

ZUSAMMENSETZUNG ZUR PFLANZENGESUNDHEIT

COMPOSITION POUR LA SANTÉ DES PLANTES

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**RS**

(30) Priority: **05.02.2008 PCT/EP2008/051375**
**01.08.2008 EP 08161623**

(43) Date of publication of application:
**01.01.2020 Bulletin 2020/01**

(62) Document number(s) of the earlier application(s) in accordance with Art. 76 EPC:
**09707307.6 / 2 240 027**

(73) Proprietor: **BASF SE**
**67056 Ludwigshafen am Rhein (DE)**

(72) Inventors:
- **WILHELM, Ronald**
  **65719 Hofheim (DE)**
- **PRADE GUTTENKUNST, Alexander**
  **SP 09851-550 Sao Bernardo do Campo (BR)**
- **MERCK, Michael**
  **20020 Arese (IT)**
- **BEGLIOMINI, Edson**
  **SP 04362-030 Sao Paulo (BR)**
- **ECCO, Marlon**
  **78740-205 Rondonopolis, Mato Grosso (BR)**
- **TAVARES-RODRIGUES, Marco Antonio**
  **04317-180 Jabaquara - Sao Paulo, SP (BR)**
- **VOESTE, Dirk**
  **67117 Limburgerhof (DE)**

(74) Representative: **BASF IP Association**
**BASF SE**
**GBI-C006**
**67056 Ludwigshafen (DE)**

(56) References cited:
**EP-A1- 1 856 978** **WO-A1-2005/034628**
**WO-A1-2006/015865** **WO-A1-2006/037632**
**WO-A1-2007/071656** **WO-A1-2007/131678**
**WO-A2-2006/105888** **WO-A2-2007/017416**
**WO-A2-2007/090623** **JP-A- H11 302 109**
**JP-A- H11 302 110**

- **BASF SE: "Anlage - EP06778106", , 14 September 2009 (2009-09-14), XP055748803, Retrieved from the Internet: URL:https://register.epo.org/application?tab=doclist&number=EP06778106&lng=en [retrieved on 2020-11-10]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Remarks:

The file contains technical information submitted after the application was filed and not included in this specification

(52) Cooperative Patent Classification (CPC): (Cont.)

C-Sets

**A01N 43/56, A01N 37/38, A01N 37/46, A01N 37/50, A01N 43/36, A01N 43/50, A01N 43/54, A01N 43/56, A01N 43/653, A01N 43/76, A01N 43/78, A01N 43/80, A01N 43/88, A01N 47/02, A01N 47/24, A01N 47/26, A01N 47/34, A01N 47/38, A01N 55/00, A01N 57/12, A01N 59/26; A01N 43/56, A01N 2300/00**

## Description

The present invention relates to a fungicidal mixture comprising in synergistically effective amounts

(I) N-(3',4',5'-trifluorobiphenyl-2-yl)-3-difluoromethyl-1-methyl-1H-pyrazole-4-carboxamide ; and

(II) difenoconazole;

where N-(3',4',5'-trifluorobiphenyl-2-yl)-3-difluoromethyl-1-methyl-1H-pyrazole-4-carboxamide and difenoconazole are present in a weight ratio of from 10:1 to 1:10.

In addition, the present invention relates to a method for controlling phytopathogenic fungi, wherein the fungi, their habitat, breeding grounds, their locus or the plants to be protected against pest attack, the soil or seed are treated with a pesticidally effective amount of the mixture as defined; where the method does not encompass the therapeutic treatment of the human or animal body.

WO 01/82701 discloses a method for inducing resistance of plants against virus infection by repeated application of strobilurin type active compounds. However, repeated application of fungicides may select resistant populations of the harmful fungi.

WO 2008/051672 discloses that certain anilides which encompass the present N-(3',4',5'-trifluorobiphenyl-2-yl)-3-difluoromethyl-1-methyl-1H-pyrazole-4-carboxamide induce virus tolerance.

WO 2007/104658 comprises a method of inducing tolerance of plants against bacterio-ses by application of strobilurins with anilide compounds to plants.

WO 2005/018324 discloses plant health effects of certain anilide compounds which encompass the present N-(3',4',5'-trifluorobiphenyl-2-yl)-3-difluoromethyl-1-methyl-1H-pyrazole-4-carboxamide. The particular anilide compound N-(3',4',5'-trifluorobiphenyl-2-yl)-3-difluoromethyl-1-methyl-1H-pyrazole-4-carboxamide is not explicitly disclosed therein; moreover, in the examples, only boscalid is used.

Combinations comprising a specific amide and strobilurine fungicides are disclosed in WO 2007/017416.

Combinations of amides with several fungicides are disclosed in WO 2008/095890, WO 2008/095913, WO 2008/000377,WO 2007/128756, EP application No. 08152059.5, EP application No. 08155881.9, EP application No. 07119858.4 and WO 2008/113654.

None of these references describes the synergistic fungicidal mixtures in detail.

WO 2007/017416 relates to fungicidal mixtures of N-methylpyrazole carboxamides which include the present N-(3',4',5'-trifluorobiphenyl-2-yl)-3-difluoromethyl-1-methyl-1H-pyrazole-4-carboxamide. Difenoconazole is mentioned as possible mixing partner of the carboxamides; however a mixture of N-(3',4',5'-trifluorobiphenyl-2-yl)-3-difluoromethyl-1-methyl-1H-pyrazole-4-carboxamide and difenoconazole is not disclosed.

JP H11 302109 relates to plant protection compositions containing an N-thiophene (het)arylcarboxamide and an acylalanine compound.

JP H11 302110 lates to plant protection compositions containing an N-thiophene (het)arylcarboxamide and an anilinopyrimidine.

EP-A-1856978 relates to a fungicidal mixture of cyproconazole and penthiopyrad.

WO 2006/105888 relates to fungicdal mixtures comprising N-thiophene hetarylcarbox-amides.

WO 2007/131678 relates to fungicidal mixtures comprising sedaxane (derivatives) and at least two further fungicides.

WO 2006/015865, WO 2007/090623 and WO 2006/037632 relate to mixtures of sedaxane (derivatives) or isopyrazam (derivatives) and further pesticides for controlling phytopathogenic diseases.

WO 2005/034628 relates to fungicidal mixtures of phenyl-, hetaryl- or heterocyclylcar-boxamides and a further pesticide. The N-terminus of the carboxamide group carries a biphenyl moiety, where the distal phenyl ring carries only one or two substituents.

WO 2007/071656 relates to pyrazole carboxamides and their use for combating rust in leguminous plants. The N-terminus of the carboxamide group carries a biphenyl moiety, where the first phenyl ring mandatorily carries a fluorine substituent and the second phenyl ring carries only two substituents. In a general manner, mixtures of said pyrazole carboxamides and further pesticides are also mentioned.

N-(3',4',5'-trifluorobiphenyl-2-yl)-3-difluoromethyl-1-methyl-1H-pyrazole-4-carboxamide is known as fungicide (cf., for example, WO 06/087343). It can be prepared in the manner described therein.

The further fungicide difenoconazole as well as its pesticidal action and methods for producing it is generally known. For instance, it may be found in The Pesticide Manual, 13th Edition, British Crop Protection Council (2003) among other publications.

The below remarks as to preferred embodiments of the mixtures, to their preferred use and methods of using them are to be understood either each on their own or preferably in combination with each other.

N-(3',4',5'-trifluorobiphenyl-2-yl)-3-difluoromethyl-1-methyl-1H-pyrazole-4-carboxamide, herein after referred to as "Ia", is a compound of the formula Ia

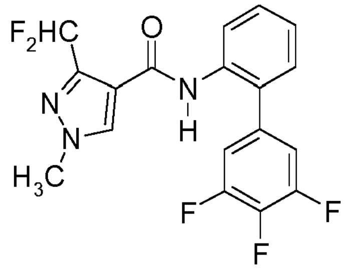

Ia

In the terms of the present invention "mixture" is not restricted to a physical mixture comprising compound (Ia) and difenoconazole, but refers to any preparation form of compound (Ia) and difenoconazole, the use of which is time- and locus-related. In one embodiment of the invention "mixture" refers to a physical mixture of the compound (Ia) and difenoconazole.

In another embodiment of the invention, "mixture" refers to compound (Ia) and difenoconazole formulated separately but applied to the same plant propagule in a temporal relationship, i.e. simultaneously or subsequently, the subsequent application having a time interval which allows a combined action of the compounds.

In another embodiment of the invention, N-(3',4',5'-trifluorobiphenyl-2-yl)-3-difluoromethyl-1-methyl-1H-pyrazole-4-carboxamide and difenoconazole are applied simultaneously, either as a mixture or separately, or subsequently to the plant propagules.

Furthermore, the individual compounds of the mixtures according to the invention such as parts of a kit or parts of the binary mixture may be mixed by the user himself in a spray tank and further auxiliaries may be added, if appropriate (tank mix). This applies also in case ternary mixtures are used according to the invention.

In all mixtures used according to the method of the present invention, compound (Ia) and difenoconazole are employed in amounts to afford a synergistic effect. The weight ratio of compound (Ia) to difenoconazole is from 1:10 to 10:1. The weight ratio refers to the total weight of compound (Ia) and difenoconazole in the mixture.

The term "BBCH principal growth stage" refers to the extended BBCH-scale which is a system for a uniform coding of phenologically similar growth stages of all mono- and dicotyldedonous plant species in which the entire developmental cycle of the plants is subdivided into clearly recoginizable and distinguishable longer-lasting developmental phases. The abbreviation BBCH dervies from Biologische Bundesanstalt, Bundessor-tenamt and Chemical industry.

The term "propagules" or "plant propagules" is to be understood to denote all the generative parts of the plant such as seeds and vegetative plant material such as cuttings and tubers (e.g. potatoes), which can be used for the multiplication of the plant. This includes seeds, roots, fruits, tubers, bulbs, rhizomes, shoots, sprouts and other parts of plants. Seedlings and young plants, which are to be transplanted after germination or after emergence from soil, may also be included. These plant propagation materials may be treated prophylactically with a plant protection compound either at or before planting or transplanting. In a preferred embodiment, the term "propagules" or "plant propagules" denotes for seed.

As a matter of course, compound (Ia) and difenoconazole are used in an effective and non-phytotoxic amount. This means that they are used in a quantity which allows to obtain the desired effect but which does not give rise to any phytotoxic symptom on the treated plant or on the plant raised from the treated propagule or treated soil.

The plants to be treated are generally plants of economic importance and/or men-grown plants. Thus, they are preferably selected from agricultural, silvicultural and ornamental plants, more preferably from agricultural plants.

Generally the term "plants" also includes plants which have been modified by breeding, mutagenesis or genetic engineering. Genetically modified plants are plants, which genetic material has been modified by the use of recombinant DNA techniques. The use of recombinant DNA techniques makes modifications possible that cannot readily be obtained by cross breeding under natural circumstances, mutations or natural recombination.

Thus, also the preferred soybeans mentioned herein can be a non-transgenic plant, e.g. as obtained by traditional breeding, or can have at least one transgenic event. In one embodiment it is preferred that the soybean plant be a transgenic plant having preferably a transgenic event that confers resistance to a pesticide, preferably against the herbicide glyphosate. Accordingly, it is preferred that the transgenic plant be one having a transgenic event that provides glyphosate resistance. Some examples of such preferred transgenic plants having transgenic events that confer glyphosate resistance are described in US 5,914,451, US 5,866,775, US 5,804,425, US 5,776,760, US 5,633,435, US 5,627,061, US 5,463,175, US 5,312,910, US 5,310,667, US 5,188,642, US 5,145,783, US 4,971,908 and US 4,940,835. More preferably, the transgenic soybean plant has the characteristics of "Roundup-Ready" (RR) transgenic soybeans (available from Monsanto Company, St. Louis, Mo.).

"Silvicultural plants" in the terms of the present invention are trees, more specifically trees used in reforestation or industrial plantations. Industrial plantations generally serve for the commercial production of forest products, such as wood, pulp, paper, rubber, Christmas trees, or young trees for gardening purposes. Examples for silvicultural plants are conifers, like pines, in particular *Pinus* spec., fir and spruce, eucalyptus, tropical trees like teak, rubber tree, oil palm, willow (*Salix*), in particular *Salix* spec., poplar (cottonwood), in particular *Populus* spec., beech, in particular *Fagus* spec., birch and oak.

In another embodiment of the invention, the plant is an ornamental plant. "Ornamental plants" are plants which are commonly used in gardening, e.g. in parks, gardens and on balconies. Examples are turf, geranium, pelargonia, petunia, begonia, and fuchsia, to name just a few among the vast number of ornamentals.

"Agricultural plants" are plants of which a part (e.g. seeds) or all is harvested or cultivated on a commercial scale or which serve as an important source of feed, food, fibers (e.g. cotton, linen), combustibles (e.g. wood, bioethanol, biodiesel, biomass) or other chemical compounds. Agricultural plants may also include horticultural plants, i.e. plants grown in gardens (and not on fields), such as certain fruits and vegetables. Preferred agricultural plants are for example cereals, e.g. wheat, rye, barley, triticale, oats, sorghum or rice, beet, e.g. sugar beet or fodder beet; fruits, such as pomes, stone fruits or soft fruits, e.g. apples, pears, plums, peaches, almonds, cherries, strawberries, raspberries, blackberries or gooseberries; leguminous plants, such as lentils, peas, alfalfa or soybeans; oil plants, such as rape, oil-seed rape, canola, linseed, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, canola, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e.g. conifers; and on the plant propagation material, such as seeds, and the crop material of these plants.

More preferred agricultural plants are field crops, such as potatoes, sugar beets, cereals such as wheat, rye, barley, oats, sorghum, rice, corn, cotton, rape, oilseed rape and canola, legumes such as soybeans, peas and field beans, sunflowers, sugar cane; ornamentals; or vegetables, such as cucumbers, tomatoes, or onions, leeks, lettuce, squashes, most preferred agricultural plants are potatoes, sugar beets, cereals such as wheat, rye, barley, oats, sorghum, rice, corn, cotton, soybeans, oilseed rape, canola, sunflower and utmost preferred plant is soybean.

During the present invention, it has been found that the mixtures according to the present invention as described above provide synergistic fungicidal effects.

Thus, we also found a method for controlling pythopathogenic fungi, wherein the fungi, their habitat, breeding grounds, their locus or the plants to be protected against fungal attack, the soil or seed are treated with a pesticidally effective amount of the mixtures according to the invention.

"Locus" means a plant, seed, soil, area, material or environment in which a pest is growing or may grow.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary according to the prevailing conditions such as desired pesticidal effect and duration, weather, target species, locus, mode of application, and the like.

As said, the mixtures according to the invention comprise

(1) N-(3',4',5'-trifluorobiphenyl-2-yl)-3-difluoromethyl-1-methyl-1H-pyrazole-4-carboxamideof the formula Ia (compound Ia); and

(2) difenoconazole.

This mixture is herein below defined as "novel mixtures according to the present invention".

The weight ratio of the compound (Ia) to difenoconazole is from 1:10 to 10:1. The weight ratio refers to the total weight of compound (Ia) and difenoconazole in the mixture.

Herein, we have found that simultaneous, that is joint or separate, application of compound (Ia) and difenoconazole or successive application of compound (Ia) and difenoconazole allows enhanced control of pests, that means harmful plant diseases, compared to the control rates that are possible with the individual compounds (synergistic mixtures).

Advantageously, the inventive mixtures are suitable for controlling the following plant diseases: *Albugo* spp. (white rust) on ornamentals, vegetables (e. g. *A. candida*) and sunflowers (e. g. *A. tragopogonis*); *Alternaria* spp. (Alternaria leaf spot) on vegetables, rape (*A. brassicola* or *brassicae*), sugar beets (*A. tenuis*), fruits, rice, soybeans, potatoes (e. g. *A. solani* or *A. alternata*), tomatoes (e. g. *A. solani* or *A. alternata*) and wheat; *Aphanomyces* spp. on sugar beets

and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.) on corn (e. g. *D. maydis*), cereals (e. g. *B. sorokiniana*: spot blotch), rice (e. g. *B. oryzae*) and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn, rice, sugar beets (e. g. *C. beticola*), sugar cane, vegetables, coffee, soybeans (e. g. *C. sojina* or *C. kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus*, anamorph: *B. sorokiniana*) and rice (e. g. *C. miyabeanus*, anamorph: *H. oryzae*); *Colletotrichum* (teleomorph: *Glomerella*) spp. (anthracnose) on cotton (e. g. *C. gossypii*), corn (e. g. *C. graminicola*), soft fruits, potatoes (e. g. *C. coccodes*: black dot), beans (e. g. *C. lindemuthianum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cy-cloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri*, teleomorph: *Neonectria liriodendri*: Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium*, teleomorph: *Pyrenophora*) spp. on corn, cereals, such as barley (e. g. *D. teres*, net blotch) and wheat (e. g. *D. tritici-repentis*: tan spot), rice and turf; Esca (dieback, apoplexy) on vines, caused by *Formitiporia* (syn. *Phellinus*) *punc-tata*, *F. mediterranea*, *Phaeomoniella chlamydospora* (earlier *Phaeoacremonium chla-mydosporum*), *Phaeoacremonium aleophilum* and/or *Botryosphaeria obtusa*; *Elsinoe* spp. on pome fruits (*E. pyri*), soft fruits (*E. veneta*: anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae*), vegetables (e. g. *E. pisi*), such as cucurbits (e. g. *E. cichoracearum*), cabbages, rape (e. g. *E. crucife-rarum*); *Eutypa lata* (Eutypa canker or dieback, anamorph: *Cytosporina lata*, syn. *Liber-tella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G.* zeae) and rice (e. g. *G. fujikuroi*: Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e.g. *G. sabinae* (rust) on pears; *Helminthosporium* spp. (syn. *Drechslera*, teleomorph: *Cochliobolus*) on corn, cereals and rice; *Hemileia* spp., e.g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e.g. wheat or barley); *Microsphaera diffusa* (powdery mildew) on soybeans; *Monilinia* spp., e.g. *M. laxa*, *M. fructicola* and *M. fructigena* (bloom and twig blight, brown rot) on stone fruits and other rosaceous plants; *Mycosphaerella* spp. on cereals, bananas, soft fruits and ground nuts, such as e.g. *M. graminicola* (anamorph: *Septoria tritici*, Septoria blotch) on wheat or *M. fijiensis* (black Sigatoka disease) on bananas; *Peronospora* spp. (downy mildew) on cabbage (e.g. *P. brassicae*), rape (e.g. *P. parasitica*), onions (e.g. *P. destructor*), tobacco (*P. tabacina*) and soybeans (e.g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli*, teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma*, syn. *P. sojae*), potatoes and tomatoes (e. g. *P. infestans*: late blight) and broad-leaved trees (e. g. *P. ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudo-pezicula tracheiphila* (red fire disease or ‚rotbrenner', anamorph: *Phialophora*) on vines; *Puccinia* spp. (rusts) on various plants, e. g. *P. triticina* (brown or leaf rust), *P. strii-formis* (stripe or yellow rust), *P. hordei* (dwarf rust), *P. graminis* (stem or black rust) or *P. recondita* (brown or leaf rust) on cereals, such as e. g. wheat, barley or rye, and asparagus (e. g. *P. asparagi*); *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea*, rice blast) on rice and *P. grisea* on turf and cereals; *Pythium* spp. (damping-off) on turf, rice, corn, wheat, cotton, rape, sunflowers, soybeans,

sugar beets, vegetables and various other plants (e. g. *P. ultimum* or *P. aphani-dermatum*); *Ramularia* spp., e. g. *P. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum*); *Septoria* spp. on various plants, e. g. *S. glycines* (brown spot) on soybeans, *S. tritici* (Septoria blotch) on wheat and *S.* (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum*, syn. *Helminthosporium turcicum*) and turf; *Sphacelotheca* spp. (smut) on corn, (e. g. *S. reiliana*: head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries*, wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus*, syn. *U. phaseoli*) and sugar beets (e. g. *U. betae*); *Ustilago* spp. (loose smut) on cereals (e. g. *U. nuda* and *U. avaenae*), corn (e. g. *U. maydis*: corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

The inventive mixtures are also suitable for controlling harmful fungi in the protection of materials (e. g. wood, paper, paint dispersions, fiber or fabrics) and in the protection of stored products. As to the protection of wood and construction materials, the particular attention is paid to the following harmful fungi: Ascomycetes such as Ophiostoma spp., Ceratocystis spp., Aureobasidium pullulans, Sclerophoma spp., Chaetomium spp., Humicola spp., Petriella spp., Trichurus spp.; Basidiomycetes such as Coniophora spp., Coriolus spp., Gloeophyllum spp., Lentinus spp., Pleurotus spp., Poria spp., Ser-pula spp. and Tyromyces spp., Deuteromycetes such as Aspergillus spp., Cladosporium spp., Penicillium spp., Trichorma spp., Alternaria spp., Paecilomyces spp. and Zy-gomycetes such as Mucor spp., and in addition in the protection of stored products the following yeast fungi are worthy of note: Candida spp. and Saccharomyces cerevisae.

They are particularly important for controlling a multitude of fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants.

Preferably, these mixtures are used for controlling a multitude of fungi on field crops, such as potatoes sugar beets, tobacco, cereals such as wheat, rye, barley, oats, sorghum, rice, corn, cotton, rape, canola, legumes such as soybeans, peas and field beans, sunflowers, coffee or sugar cane; fruits; vines; ornamentals; or vegetables, such as cucumbers, tomatoes, onions, leeks, lettuce, beans or squashes.

The treatment of a plant or its growth locus or its propagation material, such as a seed, with a mixture according to the present invention can be accomplished in several ways. The components (Ia) and difenoconazole may be applied directly to the propagules, especially the seed, and/or to the soil in which the seed is to be planted or before planting or transplanting, or for example, at the time of planting along with the seed (for example in-furrow application).

The mixture according to the present invention may also comprise a solvent or solid carrier and compound (Ia) and difenoconazole (and/or their salts) can be converted into customary types of agrochemical formulations, e.g. solutions, emulsions, suspensions, dusts, powders, pastes and granules together or separately. The formulation type depends on the particular intended purpose; in each case, it should ensure a fine and uniform distribution of the compound according to the invention.

Examples for formulation types are suspensions (SC, OD, FS), pastes, pastilles, wettable powders or dusts (WP, SP, SS, WS, DP, DS) or granules (GR, FG, GG, MG), which can be water-soluble or wettable, as well as gel

formulations for the treatment of plant propagation materials such as seeds (GF).

Usually the formulation types (e.g. SC, OD, FS, WG, SG, WP, SP, SS, WS, GF) are employed diluted. Formulation types such as DP, DS, GR, FG, GG and MG are usually used undiluted.

The formulations are prepared in a known manner (cf. US 3,060,084,

EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030,

GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical formulations may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e.g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wtters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Swit-zerland), polycarboxylates (Sokolan® types, BASF, Germany), polyalkoxylates, polyvinylamines (Lupasol® types, BASF, Germany), polyvinylpyrrolidone and the copolymers therof.

Examples for thickeners (i.e. compounds that impart a modified flowability to formulations, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, U.S.A).

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52,

acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the compounds I (and optionally compound II) and, if appropriate, further active substances, with at least one solid carrier.

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Examples for formulation types are:

1. Composition types for dilution with water

i) Water-soluble concentrates (SL, LS)

10 parts by weight of N-(3',4',5'-trifluorobiphenyl-2-yl)-3-difluoromethyl-1-methyl-1H-pyrazole-4-carboxamide, and difenoconazole, according to the invention are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.

ii) Dispersible concentrates (DC)

20 parts by weight of N-(3',4',5'-trifluorobiphenyl-2-yl)-3-difluoromethyl-1-methyl-1H-pyrazole-4-carboxamide and difenoconazole, according to the invention are dissolved in 70 parts by weight of cyclohexanone with addition of 10 parts by weight of a dispersant, e. g. polyvinylpyrrolidone. Dilution with water gives a dispersion. The active substance content is 20% by weight.

iii) Emulsifiable concentrates (EC)

15 parts by weight of compound (Ia), and difenoconazole, according to the invention are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

iv) Emulsions (EW, EO, ES)

25 parts by weight of compound (Ia), and difenoconazole, according to the invention are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultra-turrax) and made into a homogeneous emulsion. Dilution with water gives an emulsion. The composition has an active substance content of 25% by weight.

v) Suspensions (SC, OD, FS)

In an agitated ball mill, 20 parts by weight of compound (Ia) and difenoconazole, according to the invention are comminuted with addition of 10 parts by weight of dispersants and wetting agents and 70 parts by weight of water or an organic solvent to give a fine active substance suspension. Dilution with water gives a stable suspension of the active substance. The active substance content in the composition is 20% by weight.

vi) Water-dispersible granules and water-soluble granules (WG, SG)

50 parts by weight of compound (Ia) and difenoconazole, according to the invention are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.

vii) Water-dispersible powders and water-soluble powders (WP, SP, SS, WS)

75 parts by weight of compound (Ia) and difenoconazole, according to the invention are ground in a rotor-stator mill with addition of 25 parts by weight of dispersants, wetting agents and silica gel. Dilution with water gives a stable dispersion or solution of the active substance. The active substance content of the composition is 75% by weight.

viii) Gel (GF)

In an agitated ball mill, 20 parts by weight of compound (Ia) and difenoconazole, according to the invention are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

2. Composition types to be applied undiluted

ix) Dustable powders (DP, DS)
5 parts by weight of compound (Ia) and difenoconazole, according to the invention are ground finely and mixed intimately with 95 parts by weight of finely divided kaolin. This gives a dustable composition having an active substance content of 5% by weight.
x) Granules (GR, FG, GG, MG)
0.5 parts by weight of compound (Ia) and difenoconazole, according to the invention is ground finely and associated with 99.5 parts by weight of carriers. Current methods are extrusion, spray-drying or the fluidized bed. This gives granules to be applied undiluted having an active substance content of 0.5% by weight.
xi) ULV solutions (UL)
10 parts by weight of compound (Ia) and difenoconazole, according to the invention are dissolved in 90 parts by weight of an organic solvent, e. g. xylene. This gives a composition to be applied undiluted having an active substance content of 10% by weight.

The agrochemical formulations generally comprise between 0.01 and 95%, preferably between 0.1 and 90%, most preferably between 0.5 and 90%, by weight of active substance(s). The active substance(s) are employed in a purity of from 90% to 100%, preferably from 95% to 100% (according to NMR spectrum).
Compositions, which are especially useful for the purposes of treatment of plant propagation materials, particularly seeds seed treatment are e.g.:

A Soluble concentrates (SL, LS)
D Emulsions (EW, EO, ES)
E Suspensions (SC, OD, FS)
F Water-dispersible granules and water-soluble granules (WG, SG)
G Water-dispersible powders and water-soluble powders (WP, SP, WS)
H Gel-Formulations (GF)
I Dustable powders (DP, DS)

These compositions can be applied to plant propagation materials, particularly seeds, diluted or undiluted.
The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e.g. by seed dressing, pelleting, coating and dusting.
The compounds mixtures of the present invention can be used as such or in the form of their compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds mixtures of the present invention.
Aqueous application forms can be prepared from emulsion concentrates, pastes or wettable powders (sprayable powders, oil dispersions) by adding water. To prepare emulsions, pastes or oil dispersions, the compounds mixtures of the present invention, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water. The active substance concentrations in the ready-to-use preparations can be varied within relatively wide ranges. In general, they are from 0.0001 to 10%, preferably from 0.001 to 1% by weight of the compounds mixtures of the present invention.
The compound mixtures of the present invention may also be used successfully in the ultra-low-volume process (ULV), it being possible to apply compositions comprising over 95% by weight of active substance, or even to apply the active substance without additives.
The compositions according to the present invention comprising the novel mixtures according to the present invention comprise a pesticidally effective amount of compound (Ia) and difenoconazole, wherein compound (Ia) and difenoconazole provide synergistic pesticidal effects.
In the methods according to the invention, the application rates of the novel mixtures according to the invention are from 0,3 g/ha to 2000 g/ha, preferably 5 g/ha to 2000 g/ha, more preferably from 20 to 1000 g/ha, in particular from

20 to 500 g/ha, depending on the type of compound and the desired effect.

In the treatment of plant propagules, preferably seed, application rates of compound (Ia) are generally from 0,001 to 1000 g per 250 kg of plant propagules, preferably seed, preferably from 0,01 to 500 g per 100 kg, in particular from 0,1g to 250 g per 100 kg of plant propagules, preferably seed.

In the treatment of plant propagules, preferably seed, application rates of mixture of the present invention are generally from 0,001 to 1000 g per 250 kg of plant propagules, preferably seed, preferably from 0,01 to 500 g per 100 kg, in particular from 0,1g to 250 g per 100 kg of plant propagules, preferably seed.

Various types of oils, wetters, adjuvants, herbicides, bactericides, other fungicides and/or pesticides may be added to the active substance(s) or the compositions comprising them, if appropriate not until immediately prior to use (tank mix). These agents can be admixed with the mixtures according to the invention according to the invention in a weight ratio of 1:100 to 100:1, preferably 1:10 to 10:1.

Adjuvants which can be used are in particular organic modified polysiloxanes such as Break Thru S 240®; alcohol alkoxylates such as Atplus 245®, Atplus MBA 1303®, Plu-rafac LF 300® and Lutensol ON 30®; EO/PO block polymers, e.g. Pluronic RPE 2035® and Genapol B®; alcohol ethoxylates such as Lutensol XP 80®; and dioctyl sulfosuccinate sodium such as Leophen RA®.

The mixtures according to the invention can, in the use form as fungicides, also be present together with other active substances, e.g. with herbicides, insecticides, growth regulators, fungicides or else with fertilizers or inoculants, as premix or, if appropriate, not until immediately prior to use (tank mix).

The compound (Ia) and difenoconazole can be used individually or already partially or completely mixed with one another to prepare the composition according to the invention. It is also possible for them to be packaged and used further as combination composition such as a kit of parts.

In one embodiment of the invention, the kits may include one or more, including all, components that may be used to prepare the composition e.g. in form of an agrochemical formulation. These kits may include compound (Ia) and/or an adjuvant component and/or an insecticide component and/or a growth regulator component and/or a herbicide and/or an inoculant. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e. not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 80 to 400 liters.

According to one embodiment, individual components of the composition according to the invention such as parts of a kit or parts of a binary or ternary mixture may be mixed by the user himself in a spray tank and further auxiliaries may be added, if appropriate (tank mix).

## Examples

Example 1 (not according to the invention)

Corn (*Zea maydis* var. M314A10) seeds were treated in a Hege 11 seed treater in a total slurry volume of 1000 ml/100kg seed. Treatments comprised:

1) Water (control)
2) Pyraclostrobin (S8) (2,5 g a.i./100kg);
3) Compound Ia (1g a.i./100kg);
4) Pyraclostrobin (S8) (2,5g a.i./100kg) + compound Ia (1g a.i./100kg).

CF Clear Binder (19 ml/100 kg seed) and color coat blue (13 ml/100 kg seed) were added to all treatments including the check. Following seed treatment, seeds were allowed to dry overnight. Seeds were planted in plastic pots (10 cm x 10 cm x 12 cm). Experiments were conducted using natural soil (sandy loam soil,source NC, U.S.A). Pots were placed inside the greenhouse in a completely randomized design. Seedlings were grown at 25°C, until they reached growth stages 10 (first leaf through coleoptile, BBCH Scale). At growth stages 10, seedlings were placed in a completely

randomized design in a low temperature incubator (Thermo Electron Corporation) and exposed to - 5 °C during 3 hrs. At the time of cold exposure, pots were at field capacity. Percentage of seedling mortality for each treatment was recorded 3 days after the cold treatment.

The efficacy of induced cold tolerance (E) was calculated as % decrease of seedling mortality in the treatments compared to the untreated control:

$$E = 1\text{-}a/b \cdot 100$$

a corresponds to the seedling mortality (%) of the treated plants and
b corresponds to the seedling mortality (%) of the untreated (control) plants

An efficacy of 0 means the seedling mortality of the treated plants corresponds to that of the untreated control plants; an efficacy of 100 means the treated plants showed a decrease in seedling mortality of 100%.

The expected efficacy of the combination of the active compounds were estimated using Colby's formula (Colby, S.R., Calculating synergistic and antagonistic responses of herbicide combinations, Weeds, 15, pp. 20-22, 1967) and compared with the observed efficacy.

Colby's formula:

$$E = x + y - x \cdot y/100$$

E expected efficacy, expressed in % of the untreated control, when using the mixture of the active compounds A and B at the concentrations a and b
x efficacy, expressed in % of the untreated control, when using the active ingredient A at the concentration a
y efficacy, expressed in % of the untreated control, when using the active ingredient B at the concentration b

Table 4: Mortality of seedlings (%) after exposure to cold temperature

| Compound applied | Application rate (g a.i./1 00kg seed) | Seedling mortality (mean %) |
|---|---|---|
| | | GS 10 (3 hrs) |
| Water (control) | 0 | 27 (a) |
| Pyraclostrobin (S8) | 2,5 | 21 (c) |
| Compound Ia | 1 | 23 (b) |
| Pyraclostrobin + compound Ia | 2,5<br>1 | 14 (d) |
| Means followed by the same letter (a), (b), (c) or (d) do not significantly differ (P = 0,05). | | |

As can be seen in table 4, after the application of compound Ia the seedling mortality, as an indicator of plant vigor, was significantly decreased, demonstrating the applica-blitiy of the compound Ia for increasing the health of plants.

The mixture of pyraclostrobin (S8) and compound Ia provided even greater protection against cold temperatures (abiotic stress) than each component individually (tables 4 and 5). The observed protection against cold temperature (increase in cold stress tolerance) based on the combination (mixture) of pyraclostrobin (S8) and compound Ia was greater than the expected values based on the Colby equation, thus demonstrating a synergistic plant health effect of the fungicide mixture (S8 + compound la).

Table 5: Efficacy (%) of cold tolerance after cold temperature exposure.

| Compound applied | Application rate (g a.i./100kg seed) | Expected efficacy (%) | Observed efficacy (%)<br>GS 10 (3 hrs) |
|---|---|---|---|
| Water (control) | 0 | | 0 |
| Pyraclostrobin (S8) | 2,5 | | 22 |
| Compound Ia | 1 | | 15 |

(continued)

| Compound applied | Application rate (g a.i./100kg seed) | Expected efficacy (%) | Observed efficacy (%) GS 10 (3 hrs) |
|---|---|---|---|
| Pyraclostrobin + compound Ia | 2,5<br>1 | 33,7 | 48 |

Example 2 (not according to the invention)

Soybeans were grown in 2008 in the Rondonopolis region, Mato Grosso, Brazil. The variety TMG 103 RR was planted at a seeding rate of 45 kg/ha. The trial was setup as randomized bloc design with 4 replications. Plot size was 10 $m^2$. The soybean seed was treated prior to planting with either orysastrobin (S6), compound Ia or was left untreated (Control). Compound Ia was used as an FS formulation (100 g a.i./L) with a dose rate of 500 ml/100kg seed (50 g a.i./100 kg). Orysastrobin (S6) was applied as an FS formulation (250 g a.i./L) with a dose rate of 300 ml per 100 kg seed (75 g a.i./100 kg). In the combination treatments of compound Ia and orysastrobin, both formulations were applied in a sequence. The formulations were applied in a total slurry volume of 600 ml/100 kg of seed.

The observed efficacy (E) of the compounds on crop emergence and crop establishment as an indicator of plant vitality and plant vigor was determined by counting the plants in a row on a distance of 5 m at 12 and 33 days after planting.

The efficacy of the fungicidal treatments was calculated as the increase in the number of plants in the treatments compared to the control (%):

$$E = (a/b - 1) \cdot 100$$

a corresponds to the number in the treated and
b corresponds to the number of plants in the untreated (control) plots

The expected efficacy of the combination of the active compounds was estimated using Colby's formula (see example 1 above)

As can be seen in table 6, after the application of compound Ia the number of plants, as an indicator of plant vigor, was significantly increased, demonstrating the applica-blitiy of the compound Ia for increasing the health of plants.

The combination (mixture) of orysastrobin and compound Ia provided even greater improvement of crop emergence (number of plants 12 days after planting) and crop establishment (number of plants 33 days after planting) than each component individually (table 6).

The observed efficacy for crop emergence, as an indicator of plant vigor, for the mixture of orysastrobin and compound Ia was greater than expected values based on the Colby equation, thus demonstrating a synergistic effect of the fungicide mixture (table 7).

Table 6: Emergence and crop establishment determined as plant population density

| Fungicide treatment | Application rate (g a.i./ 100kg seed) | Number of plants per 5 m distance (mean) | Number of plants per 5 m distance (mean) |
|---|---|---|---|
| | | 12 days after planting | 33 days after planting |
| (Control (untreated) | 0 | 35 (c) | 34 (d) |
| Orysastrobin (S6) | 75 | 55 (ab) | 52 (ab) |
| Compound Ia | 50 | 49 (b) | 45 (bc) |
| Orysastrobin + compound Ia | 75<br>50 | 62 (a) | 58 (a) |
| Means followed by the same letter (a), (b), (c) or (d) do not significantly differ (P = 0,05, Tukey's HSD) | | | |

Table 7: Efficacy of the treatments

| Fungicide treatment | Application rate (g a.i./100kg seed) | Expected efficacy (%) | Observed efficacy (%) | Expected efficacy (%) | Observed efficacy (%) |
|---|---|---|---|---|---|
| | | 12 days after planting | | 33 days after planting | |
| Control (untreated) | 0 | | 0 | | 0 |
| Orysastrobin (S6) | 75 | | 57,1 | | 52,9 |
| Compound Ia | 50 | | 40,0 | | 32,3 |
| Orysastrobin +compound Ia | 75<br>50 | 74,3 | 77,1 | 68,1 | 70,6 |

## Claims

**1.** Fungicidal mixture comprising in synergistically effective amounts

(I) N-(3',4',5'-trifluorobiphenyl-2-yl)-3-difluoromethyl-1-methyl-1H-pyrazole-4-carboxamide ; and
(II) difenoconazole;

where N-(3',4',5'-trifluorobiphenyl-2-yl)-3-difluoromethyl-1-methyl-1H-pyrazole-4-carboxamide and difenoconazole are present in a weight ratio of from 10:1 to 1:10.

**2.** A method for controlling phytopathogenic fungi, wherein the fungi, their habitat, breeding grounds, their locus or the plants to be protected against pest attack, the soil or seed are treated with a pesticidally effective amount of the mixture as defined in claim 1; where the method does not encompass the therapeutic treatment of the human or animal body.

**3.** Seed, comprising the mixture as defined in claim 1 in an amount of from 0,001 to 1000 g per 250 kg of seeds.

## Patentansprüche

**1.** Fungizide Mischung, umfassend in synergistisch wirksamen Mengen

(I) N-(3',4',5'-Trifluorbiphenyl-2-yl)-3-difluormethyl-1-methyl-1H-pyrazol-4-carboxamid und
(II) Difenoconazol;

wobei N-(3',4',5'-Trifluorbiphenyl-2-yl)-3-difluormethyl-1-methyl-1H-pyrazol-4-carboxamid und Difenoconazol in einem Gewichtsverhältnis von 10:1 bis 1:10 vorliegen.

**2.** Verfahren zur Bekämpfung von phytopathogenen Pilzen, wobei man die Pilze, ihren Lebensraum, ihre Brutstätten, ihren Standort oder die vor Schädlingsbefall zu schützenden Pflanzen, den Boden oder das Saatgut mit einer pestizid wirksamen Menge der Mischung gemäß Anspruch 1 behandelt; wobei das Verfahren die therapeutische Behandlung des menschlichen oder tierischen Körpers nicht umfasst.

**3.** Saatgut, umfassend die Mischung gemäß Anspruch 1 in einer Menge von 0,001 bis 1000 g pro 250 kg Saatgut.

## Revendications

**1.** Mélange fongicide comprenant en quantités synergiques efficaces

(I) N-(3',4',5'-trifluorobiphényl-2-yl)-3-difluorométhyl-1-méthyl-1H-pyrazole-4-carboxamide ; et
(II) difénoconazole ;

où N-(3',4',5'-trifluorobiphényl-2-yl)-3-difluorométhyl-1-méthyl-1H-pyrazole-4-carboxamide et difénoconazole sont

présents en un rapport en poids allant de 10:1 à 1:10.

**2.** Procédé pour la lutte contre des champignons phytopathogènes, dans lequel les champignons, leur habitat, les terres de reproduction, leur site ou les végétaux à protéger contre une attaque d'organismes nuisibles, le sol ou des graines sont traité(e)s par une quantité efficace sur le plan pesticide du mélange tel que défini dans la revendication 1 ; où le procédé n'englobe pas le traitement thérapeutique du corps humain ou animal.

**3.** Graines, comprenant le mélange tel que défini dans la revendication 1 en une quantité allant de 0,001 à 1 000 g par 250 kg de graines.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0182701 A
- WO 2008051672 A
- WO 2007104658 A
- WO 2005018324 A
- WO 2007017416 A
- WO 2008095890 A
- WO 2008095913 A
- WO 2008000377 A
- WO 2007128756 A
- EP 08152059
- EP 08155881
- EP 07119858
- WO 2008113654 A
- JP H11302109 B
- JP H11302110 B
- EP 1856978 A
- WO 2006105888 A
- WO 2007131678 A
- WO 2006015865 A
- WO 2007090623 A
- WO 2006037632 A
- WO 2005034628 A
- WO 2007071656 A
- WO 06087343 A
- US 5914451 A
- US 5866775 A
- US 5804425 A
- US 5776760 A
- US 5633435 A
- US 5627061 A
- US 5463175 A
- US 5312910 A
- US 5310667 A
- US 5188642 A
- US 5145783 A
- US 4971908 A
- US 4940835 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A


### Non-patent literature cited in the description


- The Pesticide Manual. British Crop Protection Council, 2003
- **BROWNING.** Agglomeration. *Chemical Engineering,* 04 December 1967, 147-48
- Perry's Chemical Engineer's Handbook. McGraw-Hill, 1963, 8-57
- **KLINGMAN.** Weed Control as a Science. J. Wiley & Sons, 1961
- **HANCE et al.** Weed Control Handbook. Blackwell Scientific, 1989
- **MOLLET, H. ; GRUBEMANN, A.** Formulation technology. Wiley VCH Verlag, 2001
- **COLBY, S.R.** Calculating synergistic and antagonistic responses of herbicide combinations. *Weeds,* 1967, vol. 15, 20-22